# EUROPÄISCHE PATENTANMELDUNG

(11) **EP 1 775 716 A1**
(43) Veröffentlichungstag der Anmeldung: **18.04.2007**
(21) Anmeldenummer: 06021124.0
(22) Anmeldetag: 09.10.2006
(51) Int. Cl.: G10L 15/26, H04M 3/493, G06F 11/34

(54) **Verfahren und System zur Ermittlung von Qualitätsindizes für interaktive Sprachantwortdienste/Dienste zum Verstehen natürlicher Sprache (IVR/NLU)**

(30) Priorität: 11.10.2005 DE 102005049008; 22.03.2006 DE 102006013183
(71) Anmelder: Deutsche Telekom AG, 53113 Bonn (DE)
(72) Erfinder: Liedtke, Klaus-Dieter, Dipl.-Ing., 31582 Nienburg (DE); Markefka, Guntbert, Dr., 38442 Wolfsburg (DE)
(74) Vertreter: Riebling, Peter

(57) **Zusammenfassung**

Es wird ein Verfahren und ein System zur Ermittlung von Informationen über die Qualität eines interaktiven Spracherkennungs- und Sprachdialogsystems angegeben, welches sich dadurch auszeichnet, dass für das System relevante Variable gemessen werden und in geeigneter Weise zueinander in Relation gesetzt werden.

Geeignet definierte Indizes und deren Werte ermöglichen Aussagen über die Qualität eines solchen Systems und den Fremdvergleich mit anderen Systemen.

## Beschreibung

Die vorliegende Erfindung betrifft ein Verfahren und ein System zur Ermittlung von Qualitätsparametern und -indizes in interaktiven Spracherkennungs- und Sprachdialogsystemen, insbesondere in Systemen zur Interactive Voice Response Technologie, unter Verwendung von geeigneten Messwerten und Indizes. Dabei bezieht sich die vorliegende Erfindung insbesondere auf solche Verfahren, die eine Aussage zur Vergleichbarkeit von verschiedenen Systemen zur interaktiven Spracherkennung und zum Sprachdialog ermöglichen. Ferner betrifft die vorliegende Erfindung ein System zur Durchführung des Verfahrens sowie ein entsprechendes Computerprogramm und ein Computerprogrammprodukt.

Im Customer Care Bereich erlebt die Interactive Voice Response-Technologie (IVR) derzeit ein stürmisches Wachstum. Unter der genannten Bezeichnung werden in der Fachwelt ganz unterschiedliche Aufgabenfelder und Funktionszusammenhänge verstanden. Des Weiteren konkurrieren unterschiedliche Technologien mit zahlreichen Möglichkeiten und Risiken.

Aufgrund der Vielfalt möglicher Aufgabenstellungen und Verfahren gibt es bislang noch keine überzeugenden Vergleichsparameter, mit denen die Qualität einer Applikation gemessen oder gar ein Benchmarking durchgeführt werden könnte.

Aufgabe der vorliegenden Erfindungsidee ist es daher, ein Verfahren anzugeben, das anhand objektivierbarer und nachvollziehbarer Rahmenwerte Aussagen über die Qualität von IVR-Applikationen in unterschiedlichen Entwicklungsstadien - von der Planungsphase bis zum Wirkbetrieb - zulässt.

Das erfindungsgemäße hier vorgestellte Verfahren präsentiert erstmals ein Raster von messbaren Parametern und errechenbaren Indizes, die über alle technologischen und anwendungsspezifischen Grenzen erstmals die Vergleichbarkeit herstellt.

Diese Aufgabe wird erfindungsgemäß durch die technische Lehre der unabhängigen Patentansprüche gelöst, auf deren Inhalt an dieser Stelle verwiesen wird.

Vorteilhafte Ausgestaltungen und Weiterbildungen der Erfindung ergeben sich aus den abhängigen Patentansprüchen, auf deren Inhalt an dieser Stelle verwiesen wird.

Kern des erfindungsgemäßen Verfahrens bildet die Berechnung der Qualitäts-Indizes, wie nachfolgend angegeben:
Index der Dienstkomplexität (Index of Service Complexity):
   = Anzahl der Produkte multipliziert mit der Anzahl der Prozesse
Index der Systemkomplexität (Index of System Complexity):
   = Anzahl der Dialog Status multipliziert mit der Anzahl der Prozesse
Index der Kundenanpassungsfähigkeit (Index der Customer Adaptivity) :
   = Maximum der Menüschritte zum erfolgreichen Anruf dividiert durch das Minimum der Menüschritte zum erfolgreichen Anruf
Index der Kundenanpassungsfähigkeit (Index of Customer Adaptability):
   = Anzahl der behandelten Nutzerprofile
Index der Servicefreundlichkeit (Index of Service Friendliness) :
   = Grad der erfolgreichen Anrufe in Prozent dividiert durch die durchschnittliche Zeit für einen erfolgreichen Anruf in Sekunden
Dichte der Hilfe (Densitiy of Help):
   = Anzahl der verschiedenen Hilfe Prompt dividiert durch die Anzahl der Dialog Status
Dichte der Zeitüberschreitungen (Densitiy of Timeout):
   = Anzahl der verschiedenen Timeout Prompts dividiert durch die Anzahl der Dialog Status
Dichte der Abweisungen (Density of Reject) :
   = Anzahl der verschiedenen Reject Prompts dividiert durch die Anzahl der Dialog Status
Index der Fehlerbehandlung (Index of Errorhandling):
   = Summe der Help- plus Timeout- plus Reject-Density-Quotienten dividiert durch drei.

Die Aufgabenstellung wird dadurch gelöst, dass Messungen aller vorgenannten Variablen durchgeführt werden und nach den angegebenen Regeln Produkte oder Quotienten der entsprechenden Variablen gebildet werden.

Wesentliche Vorteile der vorliegenden Erfindung liegen darin dass damit objektive Kriterien für den Vergleich der Qualität eines Systems im Laufe dessen Entwicklung zur Verfügung gestellt werden. Damit ist eine Kontrolle und gezielte Weiterentwicklung und Verbesserung des Systems möglich. Des Weiteren lassen sich anhand der objektiven Kriterien unterschiedliche Systeme untereinander vergleichen und einem Benchmarking unterziehen.

Nachfolgend sind nähere Einzelheiten und Überlegungen zu einem erfindungsgemäßen System und Verfahren dargelegt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale werden als erfindungswesentlich beansprucht, soweit sie einzeln oder in Kombination gegenüber dem Stand der Technik neu sind.

Die Zeichnungen erläutern das Messverfahren zur Ermittlung von Qualitätsindizes für IVR/NLU Dienste.

Harte Fakten / Berechenbar und Vergleichbar
- Nur Funktionalitäten sind zählbar und messbar. Wichtige Designfaktoren können in diesem Zusammenhang nicht relevant sein.
- Subjektive Eindrücke können auch nicht relevant sein.
- Komplexe Anwendungen zeigen einen weiten Bereich von Serviceabdeckung. Sie benötigen andere Maßstäbe als einfache Sprachlösungen.

Weiche Fakten / Der subjektive Faktor
- Viele Anrufer sind (noch) nicht an ASR-Systeme gewöhnt.
- Die Benutzerlernkurve in bestehenden Anwendungen muss beachtet werden.
- Der Parameter "Einfache Benutzung" hängt immer von der Benutzergruppe ab.
- IVR Akzeptanz hängt von externen Faktoren ab, wie Marktvorbereitung, Medienabdeckung, Anreize, etc.

Wie vergleicht man verschiedene IVR-Moden?
- Der Begriff 'IVR' umfasst verschiedene Technologien, die klare Parametersätze für einen Vergleich benötigen.
- Die Parameter müssen auf DTMF-, SingleWord-, WordSpotter- sowie auf NLU-(Natural Language Understanding) Anwendungen anwendbar sein.

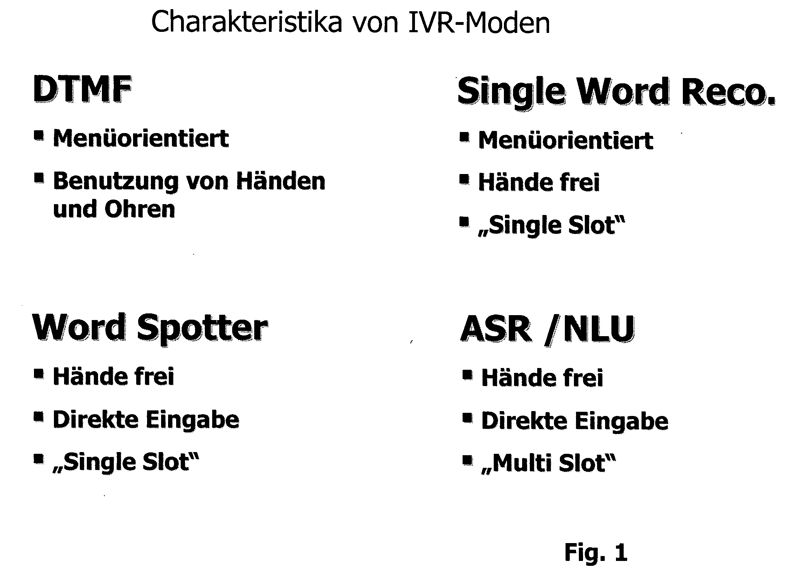

Figur 1 zeigt die Charakteristika von IVR-Moden, basierend auf DTMF SingleWord-, WordSpotter- sowie auf NLU-(Natural Language Understanding).

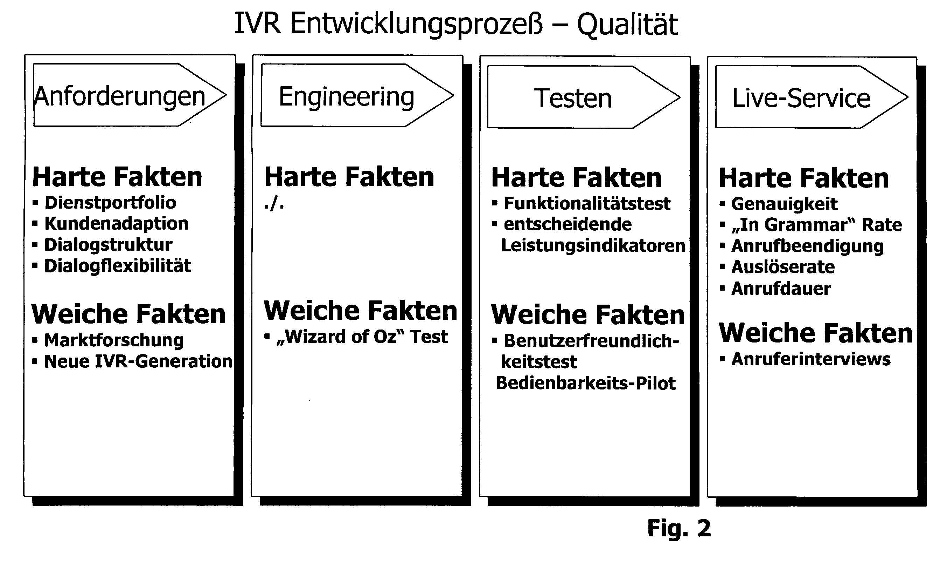

Figur 2 stellt den IVR Entwicklungsprozeß - Qualität dar, über die Anforderungen, das Engineering, den Test und den Live-Service.

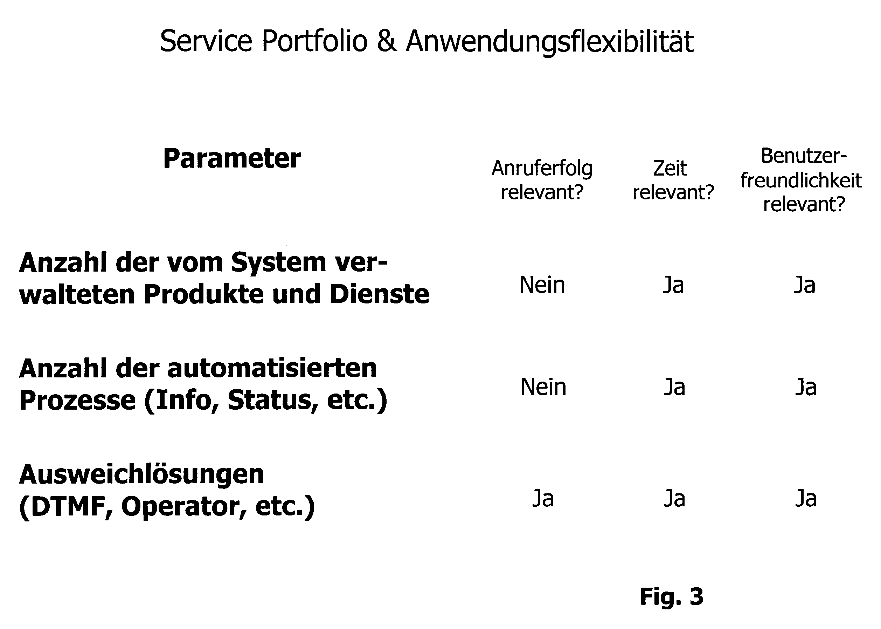

Figur 3 zeigt das Service Portfolio & die Anwendungsflexibilität. Es sind die Abhängigkeiten des Anruferfolgs, der Zeit und der Benutzerfreundlichkeit von verschiedenen Parametern dargestellt.

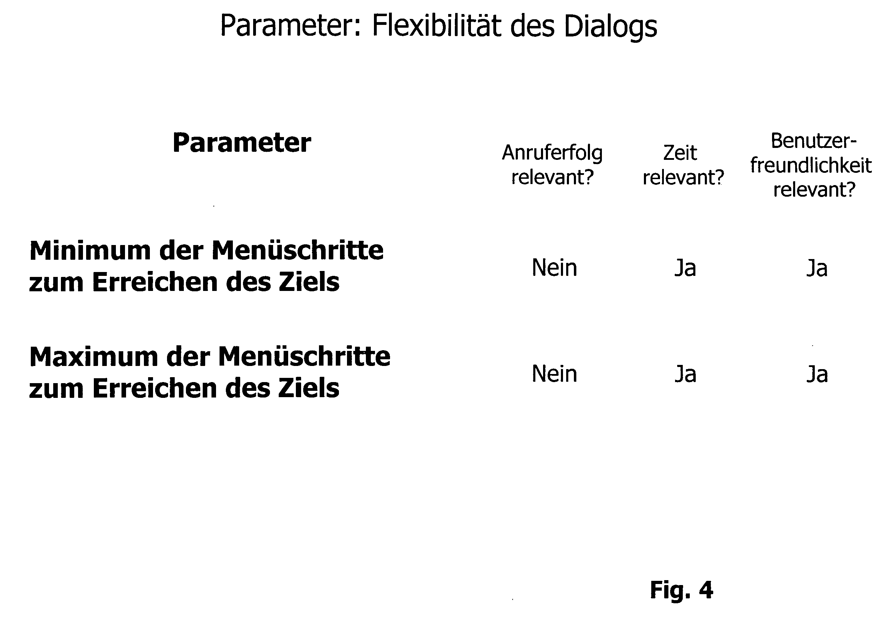

Figur 4 zeigt den Parameter: Flexibilität des Dialogs. Es sind die Abhängigkeiten des Anruferfolgs, der Zeit und der Benutzerfreundlichkeit von verschiedenen Parametern dargestellt.

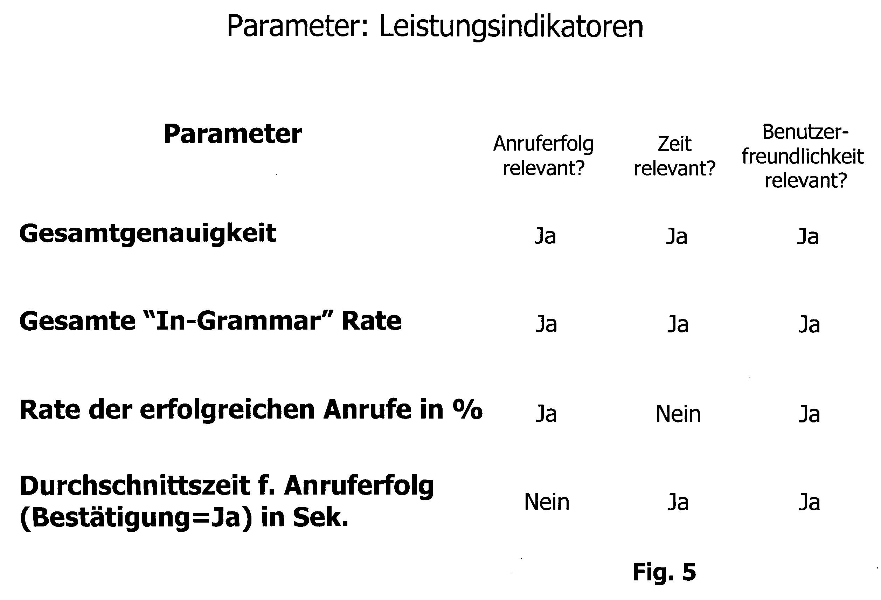

Figur 5 zeigt den Parameter: Leistungsindikatoren. Es sind die Abhängigkeiten des Anruferfolgs, der Zeit und der Benutzerfreundlichkeit von verschiedenen Parametern dargestellt.

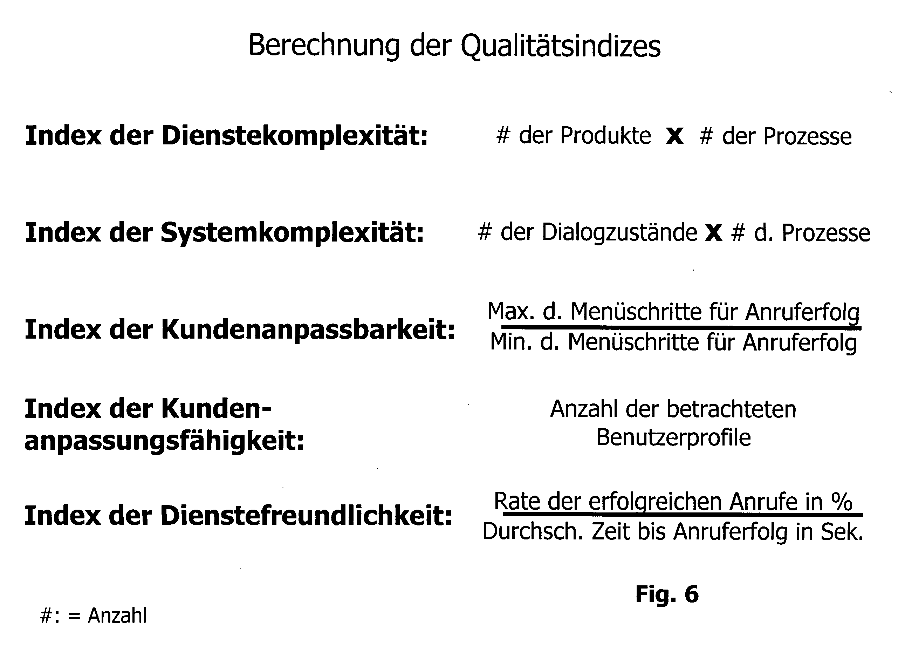

Figur 6 zeigt die Berechnung der Qualitätsindizes.

Index der Dienstkomplexität (Index of Service Complexity):= Anzahl der Produkte multipliziert mit der Anzahl der Prozesse.

Index der Systemkomplexität (Index of System Complexity):= Anzahl der Dialog Status multipliziert mit der Anzahl der Prozesse.

Index der Kundenanpassungsfähigkeit (Index der Customer Adaptivity):= Maximum der Menüschritte zum erfolgreichen Anruf dividiert durch das Minimum der Menüschritte zum erfolgreichen Anruf.

Index der Kundenanpassungsfähigkeit (Indexof Customer Adaptability):= Anzahl der behandelten Nutzerprofile.

Index der Servicefreundlichkeit (Index of Service Friendliness):= Grad der erfolgreichen Anrufe in Prozent dividiert durch die durchschnittliche Zeit für einen erfolgreichen Anruf in Sekunden.

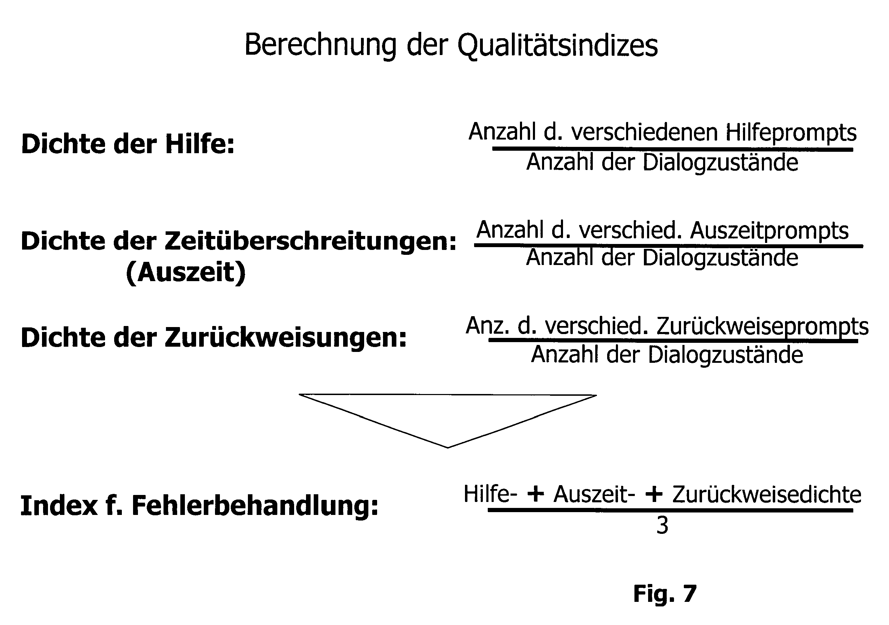

Figur 7 zeigt die Fortsetzung der Berechnung der Qualitätsindizes.

Dichte der Hilfe (Densitiy of Help):= Anzahl der verschiedenen Hilfe Prompt dividiert durch die Anzahl der Dialog Status.

Dichte der Zeitüberschreitungen (Densitiy of Timeout):= Anzahl der verschiedenen Timeout Prompts dividiert durch die Anzahl der Dialog Status.

Dichte der Abweisungen (Density of Reject):= Anzahl der verschiedenen Reject Prompts dividiert durch die Anzahl der Dialog Status.

Index der Fehlerbehandlung (Index of Errorhandling):= Summe der Help- plus Timeout- plus Reject-Density-Quotienten dividiert durch drei.

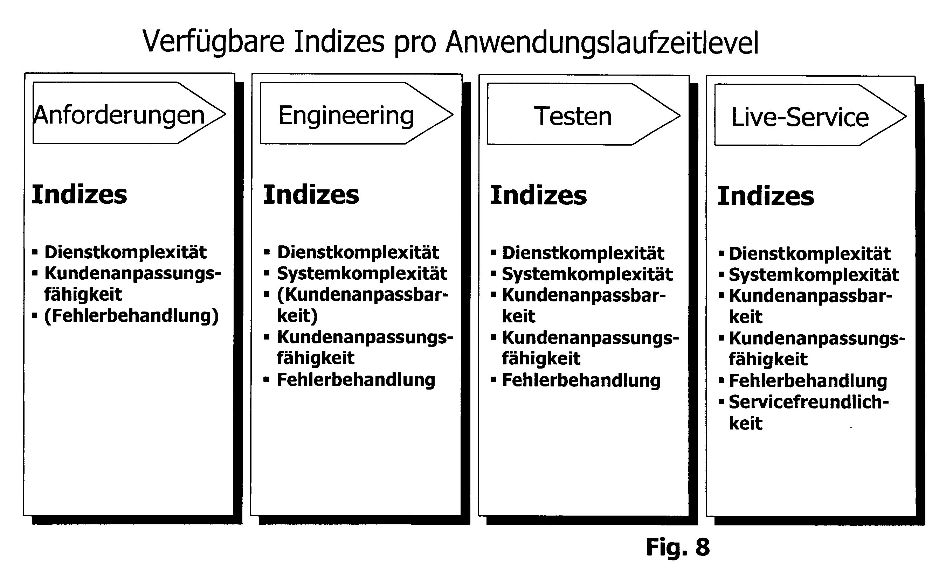

Figur 8 zeigt die verfügbaren Indizes pro Anwendungslaufzeitlevel, also die Verfügbarkeit im Rahmen der Anforderungen, des Engineering, des Tests und des Live-Service.

## Patentansprüche

1. Verfahren zur Ermittlung von Informationen über die Qualität eines interaktiven Spracherkennungs- und -dialogsystems, **dadurch gekennzeichnet, dass** für das System relevante Variablen ermittelt werden und in geeigneter Weise zueinander in Relation gesetzt werden.

2. Verfahren nach Anspruch 1, **dadurch gekennzeichnet, dass** dabei ein Maß für die Dienstkomplexität definiert wird.

3. Verfahren nach Anspruch 1, **dadurch gekennzeichnet, dass** dabei ein Maß für die Systemkomplexität definiert wird.

4. Verfahren nach Anspruch 1, **dadurch gekennzeichnet, dass** dabei ein Maß für die Kundenadaptivität definiert wird.

5. Verfahren nach Anspruch 1, **dadurch gekennzeichnet, dass** dabei ein Maß für die Kundenadaptabilität definiert wird.

6. Verfahren nach Anspruch 1, **dadurch gekennzeichnet, dass** dabei ein Maß für die Dienstfreundlichkeit definiert wird.

7. Verfahren nach Anspruch 1, **dadurch gekennzeichnet, dass** dabei ein Maß für die Hilfedichte definiert wird.

8. Verfahren nach Anspruch 1, **dadurch gekennzeichnet, dass** dabei ein Maß für die Zeitüberschreitungsdichte (Timeoutdichte) definiert wird.

9. Verfahren nach Anspruch 1, **dadurch gekennzeichnet, dass** dabei ein Maß für die Dichte der zurückgewiesenen Rufe definiert wird.

10. Verfahren nach Anspruch 1, **dadurch gekennzeichnet, dass** dabei ein Index für die Fehlerbehandlung definiert wird.

11. Verfahren nach einem der vorangegangenen Ansprüche 1 bis 10, **dadurch gekennzeichnet, dass** die Ergebnisse der Messungen und Definitionen verwendet werden, um verschiedene Systeme miteinander zu vergleichen.

12. System zur interaktiven Spracherkennung und zum interaktiven Sprachdialog **dadurch gekennzeichnet, dass** es eine Auswerteeinheit besitzt, über die mittels in der Auswerteeinheit implementierte Algorithmen Messwerte und Leistungsparameter ausgebbar und/oder abrufbar sind.

13. Computerprogramm mit einem Programmcode, um alle Schritte eines Verfahrens nach einem der Ansprüche 1 bis 11 durchzuführen, wenn das Computerprogramm auf einem Computer oder einer entsprechenden Recheneinheit ausgeführt wird.

14. Computerprogrammprodukt mit einem Programmcode, der auf einem computerlesbaren Datenträger gespeichert ist, um alle Schritte eines Verfahrens nach einem der Ansprüche 1 bis 11 durchzuführen, wenn das Computerprogramm auf einem Computer oder einer entsprechenden Recheneinheit ausgeführt wird.
